# EUROPÄISCHE PATENTSCHRIFT

(11) **EP 2 267 204 B1**
(45) Veröffentlichungstag und Bekanntmachung des Hinweises auf die Patenterteilung: **25.12.2013**
(21) Anmeldenummer: 10167159.2
(22) Anmeldetag: 24.06.2010
(51) Int. Cl.: D04B 21/16, D03D 15/00, E02B 3/12

(54) **Textiles Flächengebilde mit integrierter Lichtleitfaser**
Textile sheet with integrated optical fibre
Structure textile plate dotée d'une fibre conductrice de lumière intégrée

(30) Priorität: 26.06.2009 DE 102009027254
(43) Veröffentlichungstag der Anmeldung: 29.12.2010
(73) Patentinhaber: Huesker Synthetic GmbH, 48712 Gescher (DE)
(72) Erfinder: Pintz, Heiko, 48527 Nordhorn (DE)
(74) Vertreter: Buchenau, Thomas

(56) Entgegenhaltungen:
- EP-A2- 0 280 255
- EP-A2- 0 665 457
- WO-A2-2008/007025
- DE-A1- 10 110 329
- DE-B3-102006 023 588

## Beschreibung

Die Erfindung bezieht sich auf ein textiles Flächengebilde mit parallelen Fäden. Das erfindungsgemäße textile Flächengebilde dient insbesondere Bewehrungszwecken oder Armierungszwecken, zum Beispiel der Bewehrung von Böden im Tiefbau. Das textile Flächengebilde kann beispielsweise ein Gewebe oder eine Wirkware sein. Bei einem Gewebe kreuzen sich die Fäden des Gewebes in einem regelmäßigen Rapport und verlaufen abwechselnd übereinander und untereinander. Bei einer Wirkware, zum Beispiel einer nach dem Raschelverfahren hergestellten Kettenwirkware, liegen die zueinander parallelen Fäden in einer Ebene und sind durch Bindefäden fixiert. Die Fäden verlaufen vorzugsweise in Kettrichtung und können auf einem dünnen Vlies aufliegen. Sie können aber auch ohne Vlies zueinander parallel angeordnet sein. Ferner ist es möglich, in einer zweiten Lage quer verlaufende Schussfäden anzubringen und durch die Bindefäden der Wirkware mit den Kettfäden zu verbinden.

Aus WO 2008/007025 A2 ist ein textiles Flächengebilde mit einer optischen Faser bekannt, bei welcher die optische Faser dazu eingesetzt wird, ein Leck eines Teichs frühzeitig festzustellen.

Aus DE 10 2006 023 588 B3 und DE 10 2007 032 351 A1 ist es bekannt, Textilsysteme mit optischen Fasern (Lichtleiterfasern) auszustatten, um ein kontinuierliches Monitoring von Textilsystemen sowie eine vereinfachte Lokalisierung von Schäden des Textilsystems zu ermöglichen. Problematisch an der vorgeschlagenen Lösung ist, dass die in das Textilsystem eingebetteten Lichtleiterfasern beim Einbau oder zu einem späteren Zeitpunkt mechanisch beschädigt werden, wodurch die Wahrscheinlichkeit für Messfehler steigt.

Der Erfindung liegt die Aufgabe zugrunde, eine Lichtleitfaser derart in ein textiles Flächengebilde zu integrieren, dass die Lichtleitfaser, insbesondere beim Einbau des Flächengebildes, vor mechanischen Beschädigungen geschützt ist.

Diese Aufgabe wird erfindungsgemäß mit den Merkmalen des Anspruchs 1 gelöst.

*Aus* EP 0 280 265 A2 *sind optische Kabetelemente für bendförmige optische Kabel bekannt. Um hohe Packungsdichten zu erreichen, sind mehrere parallel zueinander verlaufende Lichtwellenielter sowie Polsterelemente und Längsfäden mit Hilfe querlaufenden Kunststoffbändchen zu einem Band verwebt Die Kabelelemenfe sind aufgrund Ihrer Form nicht zur Bewehrung von Böden im Tiefbau geelgnet.*

Bei einem erfindungsgemäßen textilen Flächengebilde zur Bewehrung von Böden im Tiefbau mit mindestens zwei zueinander parallel verlaufenden Kettfäden ist zwischen den parallel zueinander verlaufenden Kettfäden eine Lichtleitfaser angeordnet, welche ebenfalls parallel zu den Kettfäden verläuft und welche gegenüber den Kettfäden in ihrer Lage fixiert ist, wobei die Lichtleitfaser und die parallel zueinander verlaufenden Kettfäden jeweils einem im Wesentlichen gleich bleibenden, kreisförmigen Querschnitt aufweisen. Der Durchmesser der Lichtleitfaser ist hier kleiner als der Durchmesser der die Lichtleitfaser umgebenden Kettfäden. Durch die die Lichtleitfaser seitlich umgebenden Kettfäden und die Fixierung der Lichtleitfaser gegenüber diesen ist das Risiko einer Schädigung der Lichtleitfaser deutlich verringert. Dies gilt insbesondere für den Einbau, während welchem häufig innerhalb kürzester Zeit von dem Flächengebilde sehr große Lasten aufgenommen werden müssen.

In einer weiter bevorzugten Ausführungsform entspricht die Länge der Lichtleitfaser der Länge der diese umgebenden Kettfäden. In diesem Fall können mit Hilfe der Lichtleitfaser Veränderungen in jedem sich über die Länge des textilen Flächengebildes erstreckenden Bereichs erfasst werden.

Wenn der Abstand der beiden zueinander parallel verlaufenden Kettfäden im Wesentlichen der Breite der Lichtleitfaser entspricht, schließen sich die Kettfäden direkt seitlich an die Lichtleitfaser an und bewehren diese damit. Eine Schädigung der Lichtleitfaser durch seitlich auf diese einwirkende Kräfte ist damit praktisch ausgeschlossen.

Der Schutz der Lichtleitfaser kann weiter verbessert werden, wenn die Lichtleitfaser und die zueinander parallel verlaufenden Kettfäden jeweils einen im Wesentlichen gleichbleibenden, kreisförmigen Querschnitt aufweisen und der Durchmesser der Lichtleitfaser kleiner ist als der Durchmesser der die Lichtleitfaser umgebenden Kettfäden. In diesem Fall ist die Lichtleitfaser insofern auch von oben und von unten bewehrt, als sich von diesen Richtungen einwirkende Kräfte ggf. ausschließlich auf die Kettfäden verteilen können. Beschädigungen verursachende Krafteinwirkungen werden daher in dieser Ausführungsform ganz vermieden oder zumindest deutlich reduziert.

Alternativ oder in Ergänzung zu Vorstehendem kann die Lichtleitfaser auch durch das Vorsehen eines Schutzmantels geschützt werden. Dies kann beispielsweise eine textile Ummantelung, eine Umflechtung mit Fasern oder Fäden oder eine Ummantelung aus Gummi oder einem sonstigen Material sein.

Die Fixierung der Lichtleitfaser gegenüber den diese umgebenden Kettfäden kann beispielsweise dadurch erfolgen, dass die Lichtleitfaser auf dem Flächengebilde aufgeraschelt ist. Vor allem dann, wenn bei der Herstellung ohnehin Raschelvorgänge stattfinden, kann das Aufrascheln mit geringen oder ohne Mehrkosten in den Fertigungsvorgang von textilen Flächengebilden integriert werden.

Die Lichtleitfaser kann mit einer lichtundurchlässigen Außenschicht ummantelt sein, welche ein Austreten des Lichtes aus der Lichtleitfaser verhindert. Durch eine solche Schicht können die optischen Eigenschaften der Lichtleitfaser positiv beeinflusst werden. Die lichtundurchlässige Schicht kann auch gleichzeitig als ein die Lichtleitfaser umgebender Schutzmantel fungieren.

In einer anderen praktischen Ausführungsform des textilen Flächengebildes weist das erste Ende und/oder das zweite Ende der Lichtleitfaser einen Anschluss für eine Lichtquelle auf. Dies vereinfacht die Nutzung der Lichtleitfaser für optische Messungen.

Die Lichtleitfaser kann unterschiedlichen Zwecken dienen. Wenn ein erster und ein zweiter Anschluss vorgesehen sind, kann mit der Lichtleitfaser beispielsweise die Beschädigung des Flächengebildes festgestellt werden. Wenn an einem ersten Ende der Lichtleitfaser eine Lichtquelle angeschlossen wird und am gegenüberliegenden zweiten Ende ein Lichtdetektor angeschlossen wird, empfängt der Lichtdetektor nur dann Licht, wenn die Lichtleitfaser nicht unterbrochen ist. Bei einem Zerstören der Lichtleitfaser durch Reißen wird der Lichtfluss unterbrochen, und der Detektor gibt ein Signal ab, dem zu entnehmen ist, dass kein Licht empfangen wird. Auf diese Weise kann bei eingebautem textilem Flächengebilde festgestellt werden, ob das Flächengebilde intakt oder beschädigt ist.

Alternativ zum Anordnen eines Anschlusses für die Lichtquelle am ersten Ende und für den Lichtdetektor am zweiten Ende der Lichtleitfaser kann auch nur ein Anschluss an einem Ende vorgesehen sein. An dem anderen Ende kann dann beispielsweise ein Reflektor angeordnet sein oder die Schnittfläche am Ende der Lichtleitfaser als Reflektor ausgebildet sein. An dem einen Ende kann dann gleichzeitig Licht ausgesendet und die Intensität des reflektierten Lichts gemessen werden.

Unabhängig von der Anordnung und vom Vorhandensein der Anschlüsse kann eine Messung der Laufzeit des Lichtes in der Lichtleitfaser eine Längenmessung durchgeführt werden. Aus dieser Längenmessung und einem Vergleich mit der ursprünglichen Länge lässt sich der Dehnungszustand des textilen Flächengebildes ableiten.

Die Lichtleitfaser verläuft vorzugsweise annähernd geradlinig. Leichte Krümmungen lassen sich bei Belastung des textilen Flächengebildes in der Praxis, insbesondere bei hohen Flächenlasten, nicht vollständig vermeiden. Ein annähernd geradliniger Verlauf der Lichtleitfaser bewirkt einen zuverlässigen Transport des eingespeisten Lichtes bis zum Ende der Lichtleitfaser und im Fall der Reflexion wieder zurück zum Einspeisepunkt.

Einen annähernd geraden Verlauf der Lichtleitfaser erhält man insbesondere, wenn die Lichtleitfaser auf dem textilen Flächengebilde im Kettenwirkverfahren aufgeraschelt ist. Es sind auch Webverfahren bekannt, bei denen die Schussfäden sehr viel dünner als die Kettfäden sind und die Kettfäden daher wellenförmig umgeben, ohne sie stark zu krümmen. Auch eine derartige Anordnung ist denkbar, wobei die leichte Krümmung der Lichtleitfaser durch das Verweben nachteilig sein kann.

Die Lichtleitfaser kann bei einer praktischen Ausführungsform des textilen Flächengebildes aus einem lichtdurchlässigen Kunststoff bestehen. Insbesondere Lichtleitfasern aus PMMA sind relativ dehnbar und können mit einer hohen Transparenz hergestellt werden. Vorzugsweise werden die Elastizität und die Festigkeit der Lichtleitfaser so gewählt, dass bei Belastung des textilen Flächengebildes zuerst die Kettfäden versagen und erst bei höherer Belastung die Lichtleitfaser. Dies hat den Vorteil, dass ein Versagen oder ein zu erwartendes Versagen der Kettfäden mit Hilfe der Lichtleitfaser zuverlässig vorhersagbar ist.

Um zu gewährleisten, dass im Bereich der Lichtleitfaser durch das textile Flächengebilde Lasten aufgenommen werden können, kann die Lichtleitfaser zusammen mit mindestens einem Last aufnehmenden Faden ein Fadenbündel bilden. Insbesondere bei Gittergeweben, die gerne zur Armierung von Böden verwendet werden, ist es sinnvoll, die Lichtleitfaser in einem Fadenbündel mit mehreren Last aufnehmenden Fäden einzufügen.

Die Kettfäden und die Lichtleitfaser können in Ergänzung oder alternativ dazu über Gruppen von jeweils zwei zueinander parallel verlaufenden Schussfäden miteinander verbunden sein.

In einer besonderen Ausführungsform ist die Lichtleitfaser unterhalb der Kettfäden über parallel zueinander verlaufende Schussfäden und oberhalb der Kettfäden über diagonal verlaufende Bindefäden fixiert. Dabei können die diagonal verlaufenden Bindefäden sich beispielsweise an die Kettfäden einzeln umschlingende Bindefäden befestigt sein und teilweise parallel zu den Kettfäden verlaufen.

Eine Ausführungsform der Erfindung wird nachfolgend unter Bezugnahme auf die beigefügten Zeichnungen beschrieben. Es zeigen:
- Fig. 1: einen exemplarischen Ausschnitt eines erfindungsgemäßen textilen Flächengebildes,
- Fig. 2: eine vergrößerte Darstellung der Oberseite des in Figur 1 gezeigten Flächengebildes und
- Fig. 3: eine vergrößerte Darstellung der Unterseite des in Figur 1 gezeigten Flächengebildes.

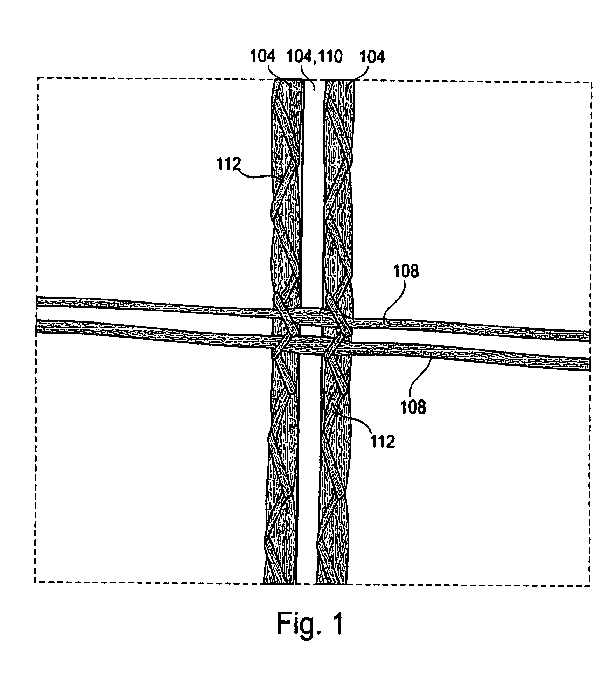

Figur 1 zeigt einen Ausschnitt eines erfindungsgemäßen textilen Flächengebildes 100. Das textile Flächengebilde 100 besteht aus mehreren Kettfadensträngen 102 mit zueinander parallel verlaufenden Kettfäden 104 und mehreren Schussfadensträngen 106 mit je zwei zueinander parallel verlaufenden Schussfäden 108.

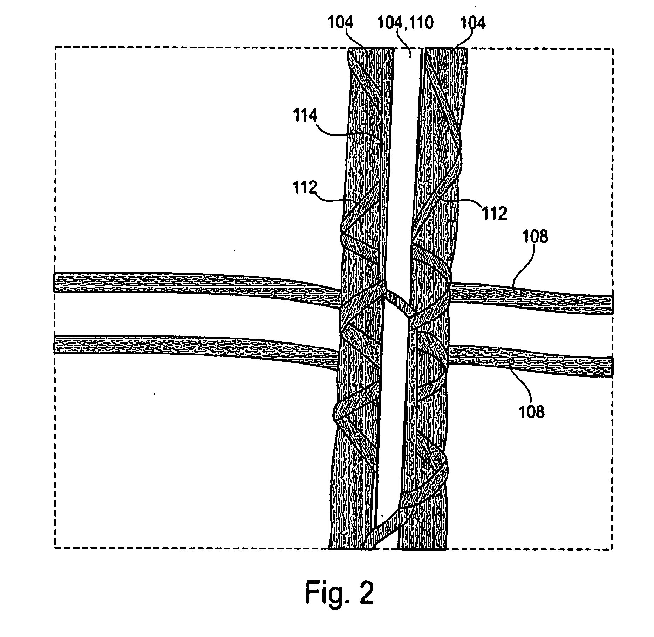

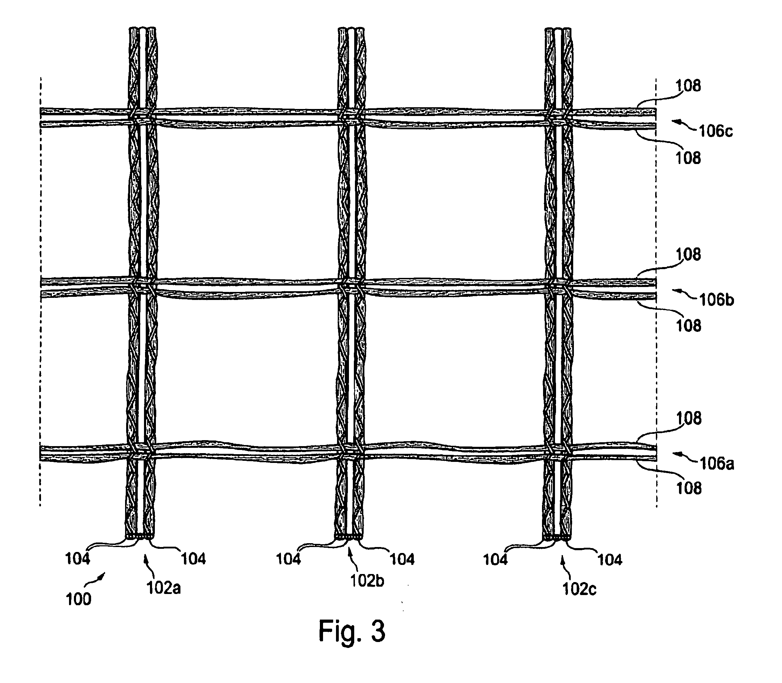

Wie in den Detaildarstellungen der Figuren 2 und 3 deutlich zu erkennen ist, weisen sowohl die Kettfäden als auch die Schussfäden 108 einen im Wesentlichen kreisförmigen Querschnitt auf.

Der mittlere Kettfaden 104 des mittleren Kettfadenstrangs 102b ist eine Lichtleitfaser 110. Die Lichtleitfaser 110 weist gegenüber den übrigen Kettfäden 104 einen etwas kleineren Querschnitt auf.

Durch die auf der Unterseite des textilen Flächengebildes senkrecht zu den Kettfäden 104 verlaufenden Schussfäden 108 wird verhindert, dass die Lichtleitfaser 110 nach unten aus den Kettfäden 104 herausrutschen kann. Die Schussfäden 108 wiederum sind dazu an um die einzelnen Kettfäden gespannten ersten Bindefäden 112 in ihrer Position fixiert.

Auf der Oberseite des textilen Flächengebildes 100 ist die Lichtleitfaser durch weitere diagonal zwischen den seitlichen Kettfäden gespannten zweiten Bindefäden 114 fixiert. Die zweiten Bindefäden 114 sind teilweise an den ersten Bindefäden 112 befestigt. Die zweiten Bindefäden 114 fixieren die Lichtleitfaser 110 nicht nur zwischen den äußeren Kettfäden 104, sondern auch gegenüber den auf der Unterseite quer verlaufenden Schussfäden 108.

In der gezeigten Ausführungsform besteht die Lichtleitfaser aus PMMA und ist mit einer undurchsichtigen, schwarzen Schicht überzogen. Es kann aber auch ein anderer transparenter Kunststoff als PMMA verwendet werden.

### Bezugszeichenliste

- 100: textiles Flächengebilde
- 102: Kettfadenstrang
- 104: Kettfaden
- 106: Schussfadenstrang
- 108: Schussfaden
- 110: Lichtleitfaser
- 112: erste Bindefäden
- 114: zweite Bindefäden

## Patentansprüche

1. Textiles Flächengebilde (100) zur Bewehrung von Böden im Tiefbau mit mindestens zwei zueinander parallel verlaufenden Kettfäden (104),
**dadurch gekennzeichnet,**
**dass** zwischen den parallel zueinander verlaufenden Kettfäden (104) mindestens eine Lichtleitfaser (110) angeordnet ist, welche ebenfalls parallel zu den Kettfäden (104) verläuft und welche gegenüber den Kettfäden (104) In ihrer Lage fixiert ist, wobei die Lichtleitfaser (110) und die zueinander parallel verlaufenden Kettfäden (104) jeweils einen Im Wesentlichen gleichbleibenden, kreisförmigen Querschnitt aufweisen und wobei der Durchmesser der Lichtleitfaser (110) kleiner ist als der Durchmesser der die Lichtleitfaser (110) umgebenden Kettfäden (104).

2. Textiles Flächengebilde (100) nach Anspruch 1, **dadurch gekennzeichnet, dass** die Länge der Lichtleitfaser (110) der Länge der diese umgebenden Kettfäden (104) entspricht.

3. Textiles Flächengebilde (100) nach einem der vorstehenden Ansprüche, **dadurch gekennzeichnet, dass** der Abstand der beiden zueinander parallel verlaufenden Kettfäden (104) im Wesentlichen der Breite der Lichtleitfaser (110) entspricht.

4. Textiles Flächengebilde (100) nach einem der vorangehenden Ansprüche, **dadurch gekennzeichnet, dass** die Lichtleitfaser (110) von einem Schutzmantel umgeben ist.

5. Textiles Flächengebilde (100) nach einem der vorangehenden Ansprüche, **dadurch gekennzeichnet, dass** die Lichtleitfaser (110) auf dem Flächengebilde (100) aufgeraschelt ist.

6. Textiles Flächengebilde (100) nach einem der vorstehenden Ansprüche, **dadurch gekennzeichnet, dass** die Lichtleitfaser (110) durch Schussfäden (108), Kettfäden (104) und/oder durch an Kettfäden (104) befestigten Bindefäden (112, 114) fixiert ist.

7. Textiles Flächengebilde (100) nach einem der vorstehenden Ansprüche, **dadurch gekennzeichnet, dass** die Lichtleitfaser (110) mit einer lichtundurchlässigen Schicht ummantelt ist.

8. Textiles Flächengebilde (100) nach einem der vorangehenden Ansprüche, **dadurch gekennzeichnet, dass** das erste Ende und/oder das zweite Ende der Lichtleitfaser (110) mit einem Anschluss für eine Lichtquelle versehen ist.

9. Textiles Flächengebilde (100) nach einem der vorangehenden Ansprüche, **dadurch gekennzeichnet, dass** es mehrere Lichtleitfasern (110) aufweist, welche jeweils zwischen zwei parallel zueinander verlaufenden, lastaufnehmenden Kettfäden (104) angeordnet sind.

10. Textiles Flächengebilde (100) nach einem der vorstehenden Ansprüche, **dadurch gekennzeichnet, dass** die Kettfäden (104) über Gruppen von jeweils zwei zueinander parallel verlaufenden Schussfäden (108) miteinander verbunden sind.

11. Textiles Flächengebilde (100) nach einem der vorangehenden Ansprüche, **dadurch gekennzeichnet, dass** die Lichtleitfaser (110) aus einem lichtdurchlässigen Kunststoff besteht.

12. Textiles Flächengebilde (100) nach einem der vorangehenden Ansprüche, **dadurch gekennzeichnet, dass** die Lichtleitfaser (110) aus Polymethylmethacrylat (PMMA) besteht.

## Claims

1. Textile fabric (100) for reinforcing floors in civil engineering with at least two warp threads (104) running parallel to one another,
**characterised in that**
arranged between the warp threads (104) running parallel to one another is at least one optical fibre (110), which also runs parallel to the warp threads (104) and which is fixed in its position relative to the warp threads (104), wherein the optical fibre (110) and the warp threads (104) running parallel to one another respectively have a substantially constant circular cross-section, and
wherein the diameter of the optical fibre (110) is smaller than the diameter of the warp threads (104) surrounding the optical fibre (110).

2. Textile fabric (100) according to claim 1, **characterised in that** the length of the optical fibre (110) corresponds to the length of the warp threads (104) surrounding it.

3. Textile fabric (100) according to one of the preceding claims, **characterised in that** the distance between the two warp threads (104) running parallel to one another substantially corresponds to the width of the optical fibre (110).

4. Textile fabric (100) according to one of the preceding claims, **characterised in that** the optical fibre (110) is surrounded by a protective casing.

5. Textile fabric (100) according to one of the preceding claims, **characterised in that** the optical fibre (110) is raschel-knitted on the fabric (100).

6. Textile fabric (100) according to one of the preceding claims, **characterised in that** the optical fibre (110) is fixed in place by weft threads (108), warp threads (104) and/or by binding threads (112, 114) fastened to warp threads (104).

7. Textile fabric (100) according to one of the preceding claims, **characterised in that** the optical fibre (110) is encased in a non-transparent layer.

8. Textile fabric (100) according to one of the preceding claims, **characterised in that** the first end and/or the second end of the optical fibre (110) is provided with a connection for a light source.

9. Textile fabric (100) according to one of the preceding claims, **characterised in that** it has multiple optical fibres (110), which are respectively arranged between two load-bearing warp threads (104) running parallel to one another.

10. Textile fabric (100) according to one of the preceding claims, **characterised in that** the warp threads (104) are connected to one another respectively by groups of two weft threads (108) running parallel to one another.

11. Textile fabric (100) according to one of the preceding claims, **characterised in that** the optical fibre (110) is made from a transparent plastic.

12. Textile fabric (100) according to one of the preceding claims, **characterised in that** the optical fibre (110) is made from polymethylacrylate (PMMA).

## Revendications

1. Structure textile plate (100) pour l'armature de sols dans le domaine du génie civil, avec au moins deux fils de chaîne (104) parallèles l'un à l'autre,
**caractérisée en ce que**,
entre les fils de chaîne (104) parallèles l'un à l'autre est agencée au moins une fibre optique (110), qui est également parallèle aux fils de chaîne (104) et dont la position est fixe par rapport aux fils de chaîne (104), la fibre optique (110) et les fils de chaîne (104) parallèles l'un à l'autre présentant respectivement une section circulaire essentiellement constante et
le diamètre de la fibre optique (110) étant inférieur au diamètre des fils de chaîne (104) entourant la fibre optique (110).

2. Structure textile plate (100) selon la revendication 1, **caractérisée en ce que** la longueur de la fibre optique (110) correspond à la longueur des fils de chaîne (104) entourant celle-ci.

3. Structure textile plate (100) selon l'une quelconque des revendications précédentes, **caractérisée en ce que** l'espacement entre les deux fils de chaîne (104) parallèles l'un à l'autre correspond essentiellement à la largeur de la fibre optique (110).

4. Structure textile plate (100) selon l'une quelconque des revendications précédentes, **caractérisée en ce que** la fibre optique (110) est entourée d'une enveloppe de protection.

5. Structure textile plate (100) selon l'une quelconque des revendications précédentes, **caractérisée en ce que** la fibre optique (110) est tricotée sur la structure plate (100).

6. Structure textile plate (100) selon l'une quelconque des revendications précédentes, **caractérisée en ce que** la fibre optique (110) est fixée grâce à des fils de trame (108), des fils de chaîne (104) et/ou grâce à des fils de liage (112, 114) fixés aux fils de chaîne (104).

7. Structure textile plate (100) selon l'une quelconque des revendications précédentes, **caractérisée en ce que** la fibre optique (110) est enveloppée d'une couche opaque.

8. Structure textile plate (100) selon l'une quelconque des revendications précédentes, **caractérisée en ce que** la première extrémité et/ou la seconde extrémité de la fibre optique (110) est munie d'un raccordement pour une source de lumière.

9. Structure textile plate (100) selon l'une quelconque des revendications précédentes, **caractérisée en ce qu'**elle présente plusieurs fibres conductrices de lumière (110), qui sont agencées respectivement entre deux fils de chaîne (104) parallèles l'un à l'autre supportant une charge.

10. Structure textile plate (100) selon l'une quelconque des revendications précédentes, **caractérisée en ce que** les fils de chaîne (104) sont reliés ensemble par l'intermédiaire de groupes de respectivement deux fils de trame (108) parallèles l'un à l'autre.

11. Structure textile plate (100) selon l'une quelconque des revendications précédentes, **caractérisée en ce que** la fibre optique (110) est constituée d'une matière plastique transparente.

12. Structure textile plate (100) selon l'une quelconque des revendications précédentes, **caractérisée en ce que** la fibre optique (110) est constituée de polyméthylméthacrylate (PMMA).
